# EUROPÄISCHE PATENTANMELDUNG

(11) **EP 4 538 028 A1**
(43) Veröffentlichungstag der Anmeldung: **16.04.2025**
(21) Anmeldenummer: 24203546.7
(22) Anmeldetag: 30.09.2024
(51) Int. Cl.: B29D 30/52, B29D 30/54, B29D 30/66

(54) **ROHLAUFSTREIFEN, NUTZFAHRZEUGREIFEN, RUNDERNEUERTER NUTZFAHRZEUGREIFEN UND VERFAHREN ZUR HERSTELLUNG EINES ROHLAUFSTREIFENS**

(30) Priorität: 12.10.2023 DE 102023210034
(71) Anmelder: Continental Reifen Deutschland GmbH, 30175 Hannover (DE)
(72) Erfinder: Lutz, André, 30175 Hannover (DE); Kristen, Florian, 30175 Hannover (DE)
(74) Vertreter: Continental Corporation

(57) **Zusammenfassung**

Die Erfindung betrifft einen Rohlaufstreifen (3) für einen neuen Nutzfahrzeugreifen oder für eine Heißrunderneuerung eines Nutzfahrzeugreifens, wobei der Rohlaufstreifen (3) Hohlräume (8) aufweist.

In jedem Hohlraum (8) befindet sich jeweils ein mit einem Fluid gefüllter, schlauchförmiger Platzhalter (9), wobei bei neuem bzw. runderneuertem Nutzfahrzeugreifen die Platzhalter (9) im Laufstreifen eingeschlossen sind und sich mit fortschreitendem Abrieb des Laufstreifens unter Entweichen des Fluids aus dem jeweiligen Hohlraum (8) eine zur Laufstreifenperipherie offene Rille bildet.

## Beschreibung

Die Erfindung betrifft einen Rohlaufstreifen für einen neuen Nutzfahrzeugreifen oder für eine Heißrunderneuerung eines Nutzfahrzeugreifens, wobei der Rohlaufstreifen Hohlräume aufweist.

Die Erfindung betrifft ferner einen Nutzfahrzeugreifen bzw. einen runderneuerten Nutzfahrzeugreifen mit einem Laufstreifen mit eingeschlossenen Hohlräumen, welche mit fortschreitendem Abrieb des Laufstreifens zur Laufstreifenperipherie offene Rillen bilden.

Darüber hinaus betrifft die Erfindung ein Verfahren zur Herstellung eines Rohlaufstreifens.

Aus der US 8 875 758 B2 ist ein vorvulkanisierter Rohlaufstreifen für einen neuen Fahrzeugreifen oder zur Runderneuerung eines Fahrzeugreifens bekannt. Der Rohlaufstreifen weist Hohlräume auf, welche zur Innenseite des Rohlaufstreifens mit aus der Kautschukmischung des Rohlaufstreifens mitgebildeten, schmalen Vorsprüngen verschlossen sind. Diese Vorsprünge sollen das Einfließen einer im Zuge der Runderneuerung aufgebrachten Haftschicht in die Hohlräume verhindern. Bei runderneuertem Fahrzeugreifen bilden die Hohlräume mit fortschreitendem Abrieb des Laufstreifens zur Laufstreifenperipherie offene Rillen.

Die US 2014/0261938A1 offenbart einen Rohlaufstreifen zur Kaltrunderneuerung eines Fahrzeugreifens. Der Rohlaufstreifen weist von seiner Unterseite ausgehende Hohlräume auf, welche mit fortschreitendem Laufstreifenabrieb zur Laufstreifenperipherie offene Rillen bilden.

Es ist daher bekannt, in insbesondere zur Runderneuerung vorgesehenen Rohlaufstreifen Hohlräume auszubilden, um bei neuem bzw. runderneuerten Nutzfahrzeugreifens die Nässeperformance über den Laufstreifenabrieb zu verbessern bzw. aufrecht zu erhalten. Im Hinblick auf die Profilsteifigkeit des Laufstreifens sind die aktuellen Ansätze verbesserungswürdig.

Der Erfindung liegt daher die Aufgabe zugrunde, einen Rohlaufstreifen und einen Nutzfahrzeugreifen bzw. einen runderneuerter Nutzfahrzeugreifen der jeweils eingangs genannten Art derart zu gestalten, dass unter Aufrechterhaltung einer möglichst hohen Profilsteifigkeit eine Verbesserung der Nässeperformance über den Laufstreifenabrieb sichergestellt ist. Der Erfindung liegt ferner die Aufgabe zugrunde, ein möglichst einfaches Verfahren zur Herstellung eines entsprechenden Rohlaufstreifens zur Verfügung zu Stellen.

Bezüglich des Rohlaufstreifens wird die gestellte Aufgabe erfindungsgemäß dadurch gelöst, dass sich in jedem Hohlraum jeweils ein mit einem Fluid gefüllter, schlauchförmiger Platzhalter befindet, wobei bei neuem bzw. runderneuertem Nutzfahrzeugreifen die Platzhalter im Laufstreifen eingeschlossen sind und sich mit fortschreitendem Abrieb des Laufstreifens unter Entweichen des Fluids aus dem jeweiligen Hohlraum eine zur Laufstreifenperipherie offene Rille bildet.

Bezüglich des Nutzfahrzeugreifens bzw. des runderneuerten Nutzfahrzeugreifens wird die gestellte Aufgabe erfindungsgemäß dadurch gelöst, dass sich in jedem Hohlraum jeweils ein diesen einnehmender, mit einem Fluid gefüllter, schlauchförmiger Platzhalter befindet.

Darüber hinaus wird die gestellte Aufgabe gelöst durch ein Verfahren zur Herstellung eines Rohlaufstreifens mit folgenden nacheinander ablaufenden Schritten:
a. Extrusion einer ersten Kautschukmischungsbahn zur Bildung eines oberen Rohlaufstreifenteils,
b. Extrusion einer zweiten Kautschukmischungsbahn zur Bildung eines unteren Rohlaufstreifenteils, wobei die zweite Kautschukmischungsbahn von ihrer Oberseite ausgehende Nuten aufweist,
c. Einlegen von mit einem Fluid gefüllten, schlauchförmigen Platzhaltern in die Nuten der zweiten Kautschukmischungsbahn und
d. Zusammenfügen der ersten Kautschukmischungsbahn mit der zweiten Kautschukmischungsbahn, derart, dass die Nuten an der Oberseite der zweiten Kautschukmischungsbahn geschlossen und aus diesen derart Hohlräume gebildet werden.

Der Rohlaufstreifen bzw. der Laufstreifen des Nutzfahrzeugreifens mit den Hohlräumen mit je einem mit einem Fluid gefüllten, schlauchförmigen Platzhalter weist - bedingt durch die Platzhalter und verglichen mit Laufstreifen mit Hohlräumen ohne Platzhalter - eine verbesserte Stabilität auf, sodass der Nutzfahrzeugreifen eine hohe Profilsteifigkeit aufweist. Mit fortschreitendem Laufstreifenabrieb erreichen die schlauchförmigen Platzhalter die Laufstreifenperipherie, wobei das in den Platzhaltern befindliche Fluid entweicht und derart die Hohlräume zur Laufstreifenperipherie offene Rillen bilden, welche eine Verbesserung der Nässeperformance über den Laufstreifenabrieb sicherstellen.

Das erfindungsgemäße Verfahren lässt sich auf einfache Weise ausführen.

Gemäß einer bevorzugten Ausführung des Rohlaufstreifens, des Nutzfahrzeugreifens bzw. des runderneuerten Nutzfahrzeugreifens ist vorgesehen, dass das Fluid, welches sich in jedem Hohlraum befindet, ein Gas, vorzugsweise Luft oder Sickstoff, ist. Solche Gase zeigen vorteilhafter Weise keine bzw. kaum Reaktionen mit dem Material des schlauchförmigen Platzhalters. Günstiger Weise entweichen die Gase aus den Hohlräumen nach entsprechendem Abrieb ohne Einfluss auf das Fahrverhalten.

Gemäß einer alternativen, bevorzugten Ausführung des Rohlaufstreifens, des Nutzfahrzeugreifens bzw. des runderneuerten Nutzfahrzeugreifens ist vorgesehen, dass das Fluid, welches sich in jedem Hohlraum befindet, eine Flüssigkeit, vorzugsweise Wasser, ist. Wasser lässt sich ebenfalls problemlos in schlauchförmigen Platzhaltern einfügen.

Eine weitere bevorzugte Ausführung des Rohlaufstreifens, des Nutzfahrzeugreifens bzw. des runderneuerten Nutzfahrzeugreifens sieht vor, dass der schlauchförmige Platzhalter ein Gummischlauch, insbesondere ein teilvulkanisierter oder vulkanisierter Gummischlauch, ist. Solche Gummischläuche sind im Nutzfahrzeugreifen günstiger Weise fest mit dem umgebenden Gummimaterial verbindbar.

Bei der letztgenannten bevorzugten Ausführung ist es von Vorteil, wenn der Gummischlauch an seiner Außenseite mit einer oberflächlichen Struktur, insbesondere in Form von Löchern und/oder Rillen mit jeweils einer Tiefe von 0,10 mm bis 1,00 mm, insbesondere von bis zu 0,50 mm, vorzugsweise von bis zu 0,20 mm, versehen ist. Dies verbessert die Verbindung zwischen dem Gummischlauch und dem Laufstreifen zusätzlich.

Gemäß einer weiteren bevorzugten Ausführung des Rohlaufstreifens, des Nutzfahrzeugreifens bzw. des runderneuerten Nutzfahrzeugreifens weist der schlauchförmige Platzhalter einen Durchmesser von 20% bis 45%, insbesondere von 30% bis 40%, der maximalen Dicke des Rohlaufstreifens bzw. der maximalen Dicke des Laufstreifens auf. Dies ist im Hinblick auf die Nässeperformance günstig, da die sich bildenden Rillen - unter gleichzeitiger Aufrechterhaltung einer hohen Profilsteifigkeit - ein für die Wasserdrainage besonders vorteilhaftes, entsprechend großes Leervolumen zur Verfügung stellen.

Für die Nässeperformance über den Laufstreifenabrieb ist es von weiterem Vorteil, wenn sich die Hohlräume und die schlauchförmigen Platzhalter in der unteren bzw. der radial inneren Laufstreifenhälfte befinden.

Darüber hinaus ist es für die Nässeperformance über den Laufstreifenabrieb günstig, wenn zwei bis sieben, insbesondere drei bis fünf, Hohlräume vorgesehen sind.

Außerdem ist es für die Nässeperformance über den Laufstreifenabrieb vorteilhaft, wenn die Hohlräume durchgehend über die Länge des Rohlaufstreifens verlaufen bzw. wenn die Hohlräume über den Umfang des Laufstreifens umlaufen.

Bevorzugter Weise ist der Rohlaufstreifen vorvulkanisiert.

Eine weitere vorteilhafte Ausführung des Rohlaufstreifens sieht vor, dass der schlauchförmige Platzhalter, im Querschnitt betrachtet, zumindest 75%, insbesondere zumindest 85%, bevorzugt zumindest 95%, der Querschnittsfläche des jeweiligen Hohlraums einnimmt.

Eine weitere vorteilhafte Ausführung des Nutzfahrzeugreifens bzw. des runderneuerten Nutzfahrzeugreifens sieht vor, dass der schlauchförmige Platzhalter den kompletten jeweiligen Hohlraum einnimmt. Dies ist für die Profilsteifigkeit von zusätzlichem Vorteil.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 schematisch einen Querschnitt im Bereich eines Formsegmentes einer Reifenheizpresse sowie schematisch einen Querschnitt eines rundzuerneuernden Nutzfahrzeugreifens und
Fig. 2 schematisch einen Querschnitt durch einen noch nicht fertig gestellten Rohlaufstreifen.

Die Erfindung befasst sich mit einem Rohlaufstreifen für einen Nutzfahrzeugreifen, insbesondere zur Heißrunderneuerung eines Nutzfahrzeugreifens, einem Nutzfahrzeugreifen, insbesondere einem runderneuerten Nutzfahrzeugreifen, und einem Verfahren zur Herstellung des Rohlaufstreifens.

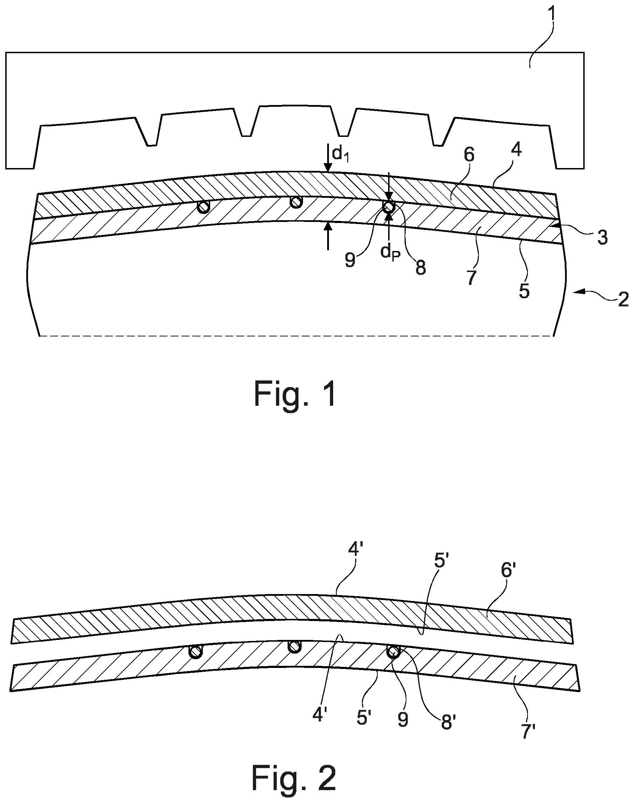

Fig. 1 zeigt schematisch ein Formsegment 1 einer Reifenheizpresse und einen lediglich angedeuteten, rundzuerneuernden Nutzfahrzeugreifen 2, auf welchem bereits ein Rohlaufstreifen 3 für die Heißrunderneuerung aufgelegt ist.

Der Rohlaufstreifen 3 weist eine Außenseite 4 und eine Innenseite 5 auf, wobei die Innenseite 5 jene Seite ist, welche auf den für die Runderneuerung vorbereiteten Nutzfahrzeugreifen 2 aufgelegt wird. Der Rohlaufstreifen 3 weist ferner eine zwischen der Außenseite 4 und der Innenseite 5 ermittelte, insbesondere konstante, maximale Dicke d₁ (Dicke an der dicksten Stelle) und - bezogen auf die maximale Dicke d₁ - eine die Außenseite 4 umfassende, obere Laufstreifenhälfte 6 und eine die Innenseite 5 umfassende, untere Laufstreifenhälfte 7 auf.

Im Inneren des Rohlaufstreifens 3 befinden sich in der unteren Laufstreifenhälfte 7 drei an die obere Laufstreifenhälfte 6 angrenzende, übereinstimmend ausgeführte Hohlräume 8, welche, im Querschnitt betrachtet, vom Rohlaufstreifen 3 komplett umlaufen sind, jeweils einen U-förmigen Querschnitt aufweisen und vorzugsweise über die jeweilige Länge des Rohlaufstreifens 3 durchgehend, also fortlaufend, ausgebildet sind. In jedem Hohlraum 8 ist jeweils ein schlauchförmiger Platzhalter 9 angeordnet, welcher mit einem Fluid, insbesondere mit einem Gas, vorzugsweise mit Luft oder Stickstoff, oder mit einer Flüssigkeit, insbesondere mit Wasser, gefüllt ist. Der Platzhalter 9 nimmt, im Querschnitt betrachtet, 75% bis 100%, insbesondere zumindest 85%, bevorzugt zumindest 95%, der Querschnittsfläche des jeweiligen Hohlraums 8 ein und weist einen Durchmesser d_{P} von 20% bis 45%, insbesondere von 30% bis 40%, der maximalen Dicke d₁ des Rohlaufstreifens 3 auf. Bevorzugter Weise ist der Platzhalter 9 ein teilvulkanisierter oder vulkanisierter Gummischlauch, welcher an seiner Außenseite mit einer oberflächlichen Struktur, insbesondere in Form von Löchern und/oder Rillen mit jeweils einer Tiefe von 0,10 mm bis 1,00 mm, insbesondere von bis zu 0,50 mm, vorzugsweise von bis zu 0,20 mm, versehen ist. Solche oberflächlichen Strukturen können beispielsweise mit Laser erzeugt werden, wobei entweder der Gummischlauch selbst mit einem Laser behandelt wird oder die zugehörige Vulkanisationsform des Gummischlauchs entsprechend korrespondierende Strukturen in Form von feinen Rillen, Löchern und/oder Erhebungen aufweist.

Wie in Fig. 2 schematisch angedeutet ist, wird zur Herstellung des Rohlaufstreifens 3 (Fig. 1) eine nachfolgend die obere Laufstreifenhälfte 6 (Fig. 1) bildende, erste Kautschukmischungsbahn 6' und eine nachfolgend die untere Laufstreifenhälfte 7 (Fig. 1) bildende, zweite Kautschukmischungsbahn 7' extrudiert. Jede Kautschukmischungsbahn 6', 7' weist eine Oberseite 4' und eine Unterseite 5' auf. Die zweite Kautschukmischungsbahn 7' ist mit drei jeweils von ihrer Oberseite 4' ausgehenden Nuten 8' versehen. In jede Nut 8` wird je einer der bereits erwähnten, mit einem Fluid gefüllten, schlauchförmigen Platzhalter 9 gelegt. Nachfolgend wird die erste Kautschukmischungsbahn 6` mit ihrer Unterseite 5' auf die Oberseite 4' der zweiten Kautschukmischungsbahn 7' aufgelegt, wodurch der Rohlaufstreifen 3 (Fig. 1) fertiggestellt ist. Dabei werden die Nuten 8' an der Oberseite 4` geschlossen und aus diesen derart die Hohlräume 8 (Fig. 1) gebildet.

Wie bereits erwähnt, wird der Rohlaufstreifen 3 zur Heißrunderneuerung auf den zur Runderneuerung vorbereiteten Nutzfahrzeugreifen aufgelegt. Nachfolgend wird der Nutzfahrzeugreifen in der die Formsegmente 1 umfassenden Reifenheizpresse vulkanisiert, sodass aus dem Rohlaufstreifen 3 ein neuer Laufstreifen gebildet wird. Bedingt durch die bei der Vulkanisation stattfindenden Fließprozesse sind die schlauchförmigen Platzhalter 9 bei runderneuertem Nutzfahrzeugreifen vom sich bildenden Laufstreifen, im Querschnitt betrachtet, komplett umschlossen (nicht gezeigt). Die schlauchförmigen Platzhalter 9 befinden sich, im Querschnitt betrachtet und bezogen auf die analog zur maximalen Dicke d₁ des Rohlaufstreifens 3 ermittelte maximale Dicke des Laufstreifens, in der radial inneren Laufstreifenhälfte. Mit fortschreitendem Abrieb des Laufstreifens erreichen die schlauchförmigen Platzhalter 9 die Laufstreifenperipherie, wobei das in den Platzhaltern 9 befindliche Fluid entweicht und derart die Hohlräume 8 zur Laufstreifenperipherie offene Rillen bilden.

Die Erfindung ist auf die beschriebenen Ausführungsbeispiele nicht beschränkt.

Der Rohlaufstreifen kann auch zur Herstellung eines neuen (nicht runderneuerten) Nutzfahrzeugreifens vorgesehen sein. Es sind insbesondere zwei bis sieben, vorzugsweise drei bis fünf, Hohlräume 8 vorgesehen.

### Bezugszeichenliste

- 1: Formsegment
- 2: Nutzfahrzeugreifen
- 3: Rohlaufstreifen
- 4: Außenseite
- 4': Oberseite
- 5: Innenseite
- 5': Unterseite
- 6: obere Laufstreifenhälfte
- 6`: erste Kautschukmischungsbahn
- 7: untere Laufstreifenhälfte
- 7': zweite Kautschukmischungsbahn
- 8: Hohlraum
- 8': Nut
- 9: schlauchförmiger Platzhalter
- d₁: maximale Dicke
- d_{P}: Durchmesser

## Patentansprüche

1. Rohlaufstreifen (3) für einen neuen Nutzfahrzeugreifen oder für eine Heißrunderneuerung eines Nutzfahrzeugreifens, wobei der Rohlaufstreifen (3) Hohlräume (8) aufweist,
**dadurch gekennzeichnet,**
**dass** sich in jedem Hohlraum (8) jeweils ein mit einem Fluid gefüllter, schlauchförmiger Platzhalter (9) befindet, wobei bei neuem bzw. runderneuertem Nutzfahrzeugreifen die Platzhalter (9) im Laufstreifen eingeschlossen sind und sich mit fortschreitendem Abrieb des Laufstreifens unter Entweichen des Fluids aus dem jeweiligen Hohlraum (8) eine zur Laufstreifenperipherie offene Rille bildet.

2. Nutzfahrzeugreifen bzw. runderneuerter Nutzfahrzeugreifen mit einem Laufstreifen mit eingeschlossenen Hohlräumen (8), welche mit fortschreitendem Abrieb des Laufstreifens zur Laufstreifenperipherie offene Rillen bilden, **dadurch gekennzeichnet,**
**dass** sich in jedem Hohlraum (8) jeweils ein diesen einnehmender, mit einem Fluid gefüllter, schlauchförmiger Platzhalter (9) befindet.

3. Rohlaufstreifen (3) nach Anspruch 1 oder
Nutzfahrzeugreifen bzw. runderneuerter Nutzfahrzeugreifen nach Anspruch 2, **dadurch gekennzeichnet,**
**dass** das Fluid, welches sich in jedem Hohlraum (8) befindet, ein Gas, vorzugsweise Luft oder Sickstoff, ist.

4. Rohlaufstreifen (3) nach Anspruch 1 oder
Nutzfahrzeugreifen bzw. runderneuerter Nutzfahrzeugreifen nach Anspruch 2, **dadurch gekennzeichnet,**
**dass** das Fluid, welches sich in jedem Hohlraum (8) befindet, eine Flüssigkeit, vorzugsweise Wasser, ist.

5. Rohlaufstreifen (3) nach einem der Ansprüche 1, 3 oder 4 oder Nutzfahrzeugreifen bzw. runderneuerter Nutzfahrzeugreifen nach einem der Ansprüche 2 bis 4,
**dadurch gekennzeichnet,**
**dass** der schlauchförmige Platzhalter (9) ein Gummischlauch, insbesondere ein teilvulkanisierter oder vulkanisierter Gummischlauch, ist.

6. Rohlaufstreifen nach Anspruch 5 oder
Nutzfahrzeugreifen bzw. runderneuerter Nutzfahrzeugreifen nach Anspruch 5, **dadurch gekennzeichnet,**
**dass** der Gummischlauch an seiner Außenseite mit einer oberflächlichen Struktur, insbesondere in von Form von Löchern und/oder Rillen mit jeweils einer Tiefe von 0,10 mm bis 1,00 mm, insbesondere von bis zu 0,50 mm, vorzugsweise von bis zu 0,20 mm, versehen ist.

7. Rohlaufstreifen (3) nach Anspruch 1 oder einem der Ansprüche 3 bis 6 oder Nutzfahrzeugreifen bzw. runderneuerter Nutzfahrzeugreifen nach einem der Ansprüche 2 bis 6,
**dadurch gekennzeichnet,**
**dass** der schlauchförmige Platzhalter (9) einen Durchmesser (d_{P}) von 20% bis 45%, insbesondere von 30% bis 40%, der maximalen Dicke (d₁) des Rohlaufstreifens (1) bzw. der maximalen Dicke des Laufstreifens aufweist.

8. Rohlaufstreifen (3) nach Anspruch 1 oder einem der Ansprüche 3 bis 7 oder Nutzfahrzeugreifen bzw. runderneuerter Nutzfahrzeugreifen nach einem der Ansprüche 2 bis 7,
**dadurch gekennzeichnet,**
**dass** sich die Hohlräume (8) und die schlauchförmigen Platzhalter (9) in der unteren bzw. der radial inneren Laufstreifenhälfte (7) befinden.

9. Rohlaufstreifen (3) nach Anspruch 1 oder einem der Ansprüche 3 bis 8 oder
Nutzfahrzeugreifen bzw. runderneuerter Nutzfahrzeugreifen nach einem der Ansprüche 2 bis 8,
**dadurch gekennzeichnet,**
**dass** zwei bis sieben, insbesondere drei bis fünf, Hohlräume (8) vorgesehen sind.

10. Rohlaufstreifen (3) nach Anspruch 1 oder einem der Ansprüche 3 bis 9 oder Nutzfahrzeugreifen bzw. runderneuerter Nutzfahrzeugreifen nach einem der Ansprüche 2 bis 9,
**dadurch gekennzeichnet,**
**dass** die Hohlräume (8) durchgehend über die Länge des Rohlaufstreifens (3) verlaufen bzw. dass die Hohlräume (8) über den Umfang des Laufstreifens umlaufen.

11. Rohlaufstreifen (3) nach Anspruch 1 oder einem der Ansprüche 3 bis 10, **dadurch gekennzeichnet, dass** der Rohlaufstreifen (3) vorvulkanisiert ist.

12. Rohlaufstreifen (3) nach Anspruch 1 oder einem der Ansprüche 3 bis 11, **dadurch gekennzeichnet, dass** der schlauchförmige Platzhalter (9), im Querschnitt betrachtet, zumindest 75%, insbesondere zumindest 85%, bevorzugt zumindest 95%, der Querschnittsfläche des jeweiligen Hohlraums (8) einnimmt.

13. Nutzfahrzeugreifen bzw. runderneuerter Nutzfahrzeugreifen nach einem der Ansprüche 2 bis 10, **dadurch gekennzeichnet, dass** der schlauchförmige Platzhalter (9) den kompletten jeweiligen Hohlraum (8) einnimmt.

14. Verfahren zur Herstellung eines Rohlaufstreifens (3) nach Anspruch 1 oder einem der Ansprüche 3 bis 12 mit folgenden nacheinander ablaufenden Schritten:
a. Extrusion einer ersten Kautschukmischungsbahn (6`) zur Bildung eines oberen Rohlaufstreifenteils (6),
b. Extrusion einer zweiten Kautschukmischungsbahn (7`) zur Bildung eines unteren Rohlaufstreifenteils (7), wobei die zweite Kautschukmischungsbahn (7`) von ihrer Oberseite (4`) ausgehende Nuten (8`) aufweist,
c. Einlegen von mit einem Fluid gefüllten, schlauchförmigen Platzhaltern (9) in die Nuten (8`) der zweiten Kautschukmischungsbahn (7`) und
d. Zusammenfügen der ersten Kautschukmischungsbahn (6`) mit der zweiten Kautschukmischungsbahn (7`), derart, dass die Nuten (8`) an der Oberseite (4`) der zweiten Kautschukmischungsbahn (7`) geschlossen und aus diesen derart Hohlräume (8) gebildet werden.
